# EUROPEAN PATENT APPLICATION

(11) **EP 1 712 970 A2**
(43) Date of publication of application: **18.10.2006**
(21) Application number: 05026519.8
(22) Date of filing: 05.12.2005
(51) Int. Cl.: G05D 1/02

(54) **Wireless controllable cleaning robot and remote controlling system for controlling the same**

(30) Priority: 14.04.2005 KR 2005031040
(71) Applicant: LG Electronics Inc., Yeongdeungpo-Gu Seoul (KR)
(72) Inventor: Il-kyun, Jung, Geumcheon-gu Seoul (KR)
(74) Representative: Vossius & Partner

(57) **Abstract**

A wireless controllable cleaning robot (200) and remote controlling system (100-1,100-n) for controlling the same, wherein a drive of the cleaning robot is controlled by means of various control signals which are transmitted from a lot of external apparatuses having various wireless communication functions. The cleaning robot includes a wireless communication module and a microprocessor. The wireless communication module receives control signals transmitted from external apparatuses on the basis of various wireless communication protocols. The microprocessor. decodes the control signals received through the wireless communication module on the basis of the corresponding wireless communication. protocol, and controls a driving of the cleaning robot in response to the decoded operation commands.

## Description

The present invention relates to a cleaning robot, and more particularly to a wireless controllable cleaning robot, wherein a driving of the cleaning robot is controlled by means of various control signals which are transmitted from a lot of external apparatuses having various wireless communication functions, and a remote controlling system for controlling the same.

A cleaning robot is an apparatus for spontaneously moving a defined cleaning area such as a house and an office, and inhaling dust or impurities. The cleaning robot includes components of a general vacuum cleaner as well as other components. Herein, other components contains a running apparatus for running the cleaning robot, a lot of sensors for detecting a collision of the cleaning robot so as to run it without colliding with various obstacles, and a microprocessor for controlling the above-mentioned components of the cleaning robot, etc.

Meanwhile, according as the growth of industry has been rapidly accomplished, it is a fact that a house is not considered as a simple residential space. Accordingly, a home network technology has been developed in order to conveniently perform a series of actions which are occurred in a house, using a computer and communication technology. In addition, according as a concern for the home network has increasingly spread, a personal wireless networking technology is being watched with interest, wherein the personal wireless networking technology such as Bluetooth, Zigbee and Ultra Wideband (UWB) is used at a short-distance within 10m. The reason is because the personal wireless networking technology compared with a wired networking technology does not need a wire connecting operation, that is, it is convenient for use.

Because the short-distance wireless networking technology is convenient for use, it has equipped various communication modules with external apparatuses such as personal desktop computers, notebook computers, mobile communication terminals and personal digital assistants (PDA). Besides, a user can control a lot of equipments using the external apparatuses.

Since the cleaning robot inhales dust or impurities under continuously moving, it most be essentially controlled by a wireless communication means. In a case of purchasing the cleaning robot, a remote controller is provided therewith to control it. Therefore, since the remote controller contains a lot of input keys which can process a driving of the cleaning robot and various commands for performing or stopping various functions, the user is possible to easily control the cleaning robot at a long-distance using a lot of input keys arranged in the remote controller.

The present invention discloses a cleaning robot which is capable of communicating with the conventional remote controller to control a cleaning robot as well as various apparatuses incorporated with various personal wireless communication technologies, and discloses a remote controlling system for controlling by wireless a cleaning robot in a house using a wire/wireless telephone and a network such as an internet.

Therefore, the present invention has been made in view of the above problems, and it is an object of the present invention to provide a wireless controllable cleaning robot, which is capable of controlling a driving thereof through a personal terminal which equips various wireless communications.

It is another object of the present invention to provide a remote controlling system of a cleaning robot, which is capable of controlling the cleaning robot in a house through a public subscriber telephone network (PSTN) from external apparatuses.

It is yet another object of the present invention to provide a remote controlling system of a cleaning robot, which is capable of controlling a cleaning robot in a house through a network such as an internet.

Thus, it is possible to control the cleaning robot using various short-distance communication methods and diversify wireless input means for inputting operation commands besides the conventional remote controller.

In addition, the cleaning robot according to the present invention is operated depending on control signals transmitted by wireless from a host device arranged in a predetermined position in a house. The host device transmits control signals to the cleaning robot through the wireless communication, wherein the control signals are inputted from external apparatuses connected to a network such as an internet.

That is, in the case where a user has an external phone call through a public subscriber telephone network (PSTN), the host device detects the call and outputs a voice response message. If the user requests a use of a remote control function of the cleaning robot, a control unit of the host device requests the user to send user license information such as a personal code number.

If the user is confirmed as a real user through the user license information, the host device outputs a remote control response comment of the cleaning robot. If the user pushes buttons of the phone, DTMF signals for remote controlling are generates. When the DTMF signals are transmitted to the host device through a public subscriber telephone network (PSTN), the host device decodes operation commands of the cleaning robot from the transmitted DTMF signals, and transmits the cleaning robot through wireless communication means including wireless LAN, Bluetooth, Zigbee and infrared. Thus, the cleaning robot performs operations corresponding to the received control signals.

The host device according to the present invention receives control commands transmitted through a network such as an internet, and transmits them to the cleaning robot through a wireless communication, thereby being capable of controlling the cleaning robot. The host device arranged in a house has inherent identification information, for example, IP address information. The user can access to the corresponding host device through a website provided from the host device and a cleaning robot provider.

When the user accesses to the host device through an external computer connected to the internet, and inputs operation commands of the cleaning robot, the host device receives the corresponding operation commands, and transmits them to the cleaning robot through the wireless communication, thereby controlling the cleaning robot.

Thus, the user is capable of remote controlling the cleaning robot by means of transmitting operation commands to the cleaning robot in a house from various external apparatuses through the network such as an internet.

The above and other objects, features and other advantages of the present invention will be more clearly understood from the following detailed description taken in conjunction with the accompanying drawings, in which:
FIG. 1 is a schematic view illustrating a cleaning robot and external apparatuses for controlling it according to a preferred embodiment of the present invention;
FIG. 2 is a schematic block diagram showing the configuration of the cleaning robot in FIG. 1;
FIG. 3 is a schematic view illustrating a remote controlling system of a cleaning robot according to an preferred embodiment of the present invention; and
FIG. 4 is a schematic block diagram showing the configuration of a host device in FIG. 3.

Now, preferred embodiments of the present invention will be described in detail with reference to the annexed drawings.

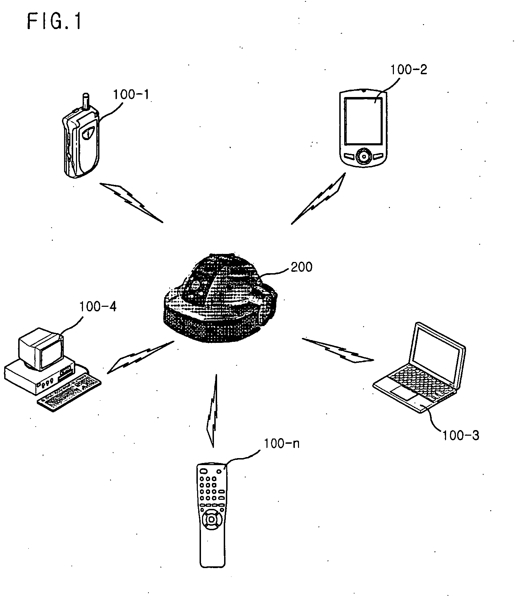

FIG. 1 is a schematic view illustrating a cleaning robot and external apparatuses for controlling it according to a preferred embodiment of the present invention. As shown in this drawing, a wireless controllable cleaning robot 200 according to a preferred embodiment of the present invention receives control signals transmitted by wireless from external apparatuses 100-1-100-n such as a desktop computer, a mobile terminal or a remote controller which are prepared in a house or an office.

The control signals which transmit to the cleaning robot 200, that is, operation commands may include a moving control command of the cleaning robot 200, a setup command of a cleaning mode, a setup command of reservation function using a timer, and the like.

The external apparatuses 100-1-100-n may include an 802.11-based wireless LAN communication means, a Bluetooth communication means, a Zigbee communication means or an infrared communication means, and may contain a user interface for receiving operation commands which are transmitted from the cleaning robot 200. The user interface is equipped to a memory embedded in the external apparatuses 100-1-100-n, and is driven in response to an access request of the user. Input means into the external apparatuses 100-1-100-n may contain a lot of input buttons which include a navigation key arranged in the external apparatuses 100-1-100-n. In addition, the Input means may be a joystick, a touch screen, a keyboard, a mouse, etc.

For example, in the case where the user executes the user interface equipped to the desktop computer in order to transmit the operation commands to the cleaning robot 200 using the desktop computer among the external apparatuses 100-1~100-n, a central processing unit in the desktop computer loads a corresponding program from the memory and drives it. The user can input the operation commands of the cleaning robot 200 using a user application displayed on a monitor of the desktop computer, wherein the operation commands may be a moving control command of the cleaning robot 200, a setup command of a cleaning mode, a setup command of reservation function using a timer, and the like.

The central processing unit in the desktop computer converts the inputted operation commands on the basis of a communication protocol of a wireless communication means arranged in the computer, into control signals, and transmits the converted control signals to the cleaning robot 200 through the wireless communication means. Herein, the wireless communication means may be any one of the 802.11-based wireless LAN communication means, the Bluetooth communication means, the Zigbee communication means and the infrared communication means.

The cleaning robot 200 receives to decode the control signals transmitted from the wireless communication means of the desktop computer, and performs operations in response to the decoded operation commands.

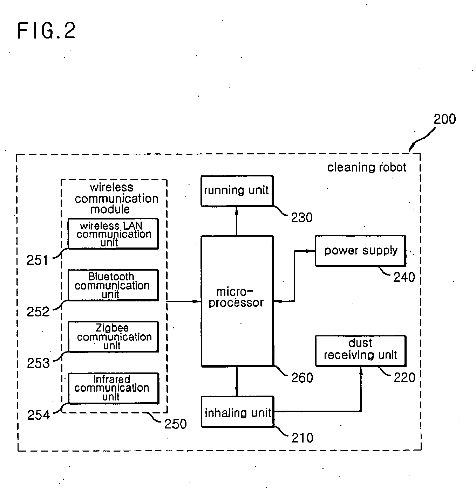

The cleaning robot 200 will be described in detail referring to FIG. 2. FIG. 2 is a schematic block diagram showing the configuration of the cleaning robot according to the preferred embodiment of the present invention. As shown in this drawing, the cleaning robot 200 includes a general basic configuration. Besides, the cleaning robot 200 further includes a wireless communication module 250 and a microprocessor 260. The wireless communication module 250 receives control signals transmitted on the basis of communication protocols of wireless communication means which is arranged in a lot of external apparatuses 100-1-100-n. The microprocessor 260 controls the whole elements of the cleaning robot 200, decodes the control signals received by the wireless communication module 250 on the basis of the corresponding communication protocol, and controls a driving of the cleaning robot 200.

To begin with, the general basic configuration of the cleaning robot 200 is as follows. The cleaning robot 200 includes a dust detecting sensor (not shown) for detecting dust or impurities in the cleaning area. In addition, the cleaning robot 200 includes an inhaling means 210, a dust gathering unit 220, a running unit 230, a power supply 240 and a microprocessor 260. Herein, the inhaling means 210 inhales the dust or impurities detected by the dust detecting sensor, and the dust gathering unit 220 gathers the dust or impurities collected by the inhaling means 210. The running unit 230 runs the cleaning robot 200, and the power supply 240 provide a driving power of the inhaling means 210 and running unit 230. The microprocessor 260 controls the above-mentioned whole elements of the cleaning robot 200. A detailed description of the general basic configuration of the cleaning robot 200 will be omitted because it is considered to be well-known.

On the other hand, the wireless communication module 250 receives control signals transmitted by wireless from various external apparatuses 100-1-100-n, and outputs them to the microprocessor 260. For example, the wireless communication module 250 may receive the control signals transmitted on the basis of the corresponding wireless communication protocol from a wireless communication modem which is arranged in the external apparatuses 100-1~100-n.

In accordance with an aspect of the present invention, the wireless communication module 250 of the cleaning robot 200 includes a wireless LAN communication unit 251 for receiving the control signals transmitted from the external apparatuses 100-1-100-n on the basis of an 802.11-based wireless communication protocol.

The 802.11 is a standard collection for wireless LAN, which has been developed by IEEE work group, and the present 802.11 standard collection contains 4 standards of 802.11, 802.11a, 802.11b and 802.11g. All of 4 standards have used a carrier sense multiple access with collision avoidance (CSMA/CA) as an Ethernet protocol for the purpose of path sharing

In accordance with another aspect of the present invention, the wireless communication module 250 of the cleaning robot 200 further includes a Bluetooth communication unit 252 for receiving the control signals transmitted from the external apparatuses 100-1-100-n on the basis of a Bluetooth communication protocol.

Bluetooth is a standard for wireless frequencies for the purpose of short-distance transmission, one-to-multi transmission, voice transmission or data transmission. According the Bluetooth standard, in the case where the communication is accomplished by passing through solid bodies except metals, it is possible to communicate between terminals in a distance of typical 10cm~10m. Herein, the external apparatuses 100-1-100-n operates as a host device, and the cleaning robot 200 operates as a slave device.

In accordance with another aspect of the present invention, the wireless communication module 250 of the cleaning robot 200 further includes a Zigbee communication unit 253 for receiving the control signals transmitted from the external apparatuses 100-1-100-n on the basis of a Zigbee communication protocol.

Zigbee is a standard for the purpose of using IEEE 802.15.4 standard in various industrial applications, which is under enacting. In a wireless networking in house/office etc., Zigbee relates to a technology for a short-distance communication of 10m~20m or so, and a technology for ubiquitous computing which has been recently noticed. In a wireless communication field, Zigbee is a wireless communication protocol for very small size, low power consumption and low price, which is required a briefness function different from 802.11 or 802.15.

In accordance with yet another aspect of the present invention, the wireless communication module 250 of the cleaning robot 200 further includes an infrared communication unit 254 for receiving the control signals transmitted from the external apparatuses 100-1-100-n on the basis of an infrared communication protocol.

The infrared communication unit 254 is an infrared communication means arranged in the external apparatuses 100-1-100-n, that is, an light receiving element for receiving an infrared light inputted from an light emitting element. Thus, the wireless communication module 250 according to the present invention is possible to receive to process the control signals transmitted on the basis of various wireless communication protocols.

According to the corresponding wireless communication protocol, the microprocessor 260 decodes the control signals received through the wireless communication module 250, and controls the cleaning robot 200. For example, in the case of where a user inputs a driving stop command of the cleaning robot 200 through a user application of a mobile communication terminal which equips the Bluetooth communication module, a mobile station modem (MSM) of the mobile communication terminal sets up a connection with the cleaning robot 200 according to the Bluetooth communication method. Besides, the MSM converts the inputted driving stop command into a control signal appreciate to the Bluetooth communication protocol, and transmits it to the cleaning robot 200.

The wireless communication module 250 of the cleaning robot 200 receives the transmitted control signal, and outputs it to the microprocessor 260. The microprocessor 260 decodes the received control signal on the basis of the corresponding Bluetooth communication protocol, and outputs the control signal to respective parts of the apparatus so as to stop driving of the running means 230 and the inhaling means 210 depending on the driving stop command of the cleaning robot 200.

Therefore, since the wireless controllable cleaning robot 200 is capable of controlling a driving thereof through a remote controller provided therewith as well as through a lot of the external apparatuses 100-1-100-n which arrange various wireless communication means, it is possible to select the most appreciate wireless control means according to available environments.

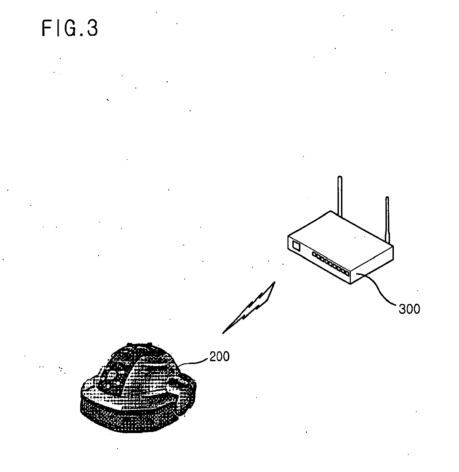

FIG. 3 is a schematic view illustrating a remote controlling system of a cleaning robot according to a preferred embodiment of the present invention. As shown in this drawing, a remote controlling system of a cleaning robot according to a preferred embodiment of the present invention includes a host device 300, and a cleaning robot 200 for transmitted from the host device 300

The host device 300 is installed in a living room at which the cleaning robot 200 is mainly run, and is connected with a telephone line in a house. The host device 300 receives operation commands of the cleaning robot 200 transmitted from external apparatuses, and then transmits them to the cleaning robot 200 through the wireless communication means. Thus, the cleaning robot 200 is operated depending on the received operation commands.

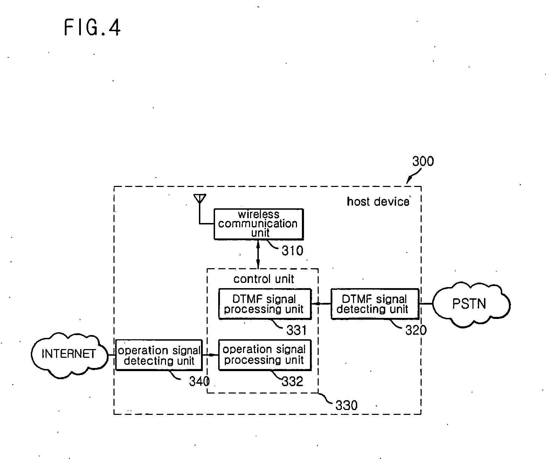

Now, the configuration of the host device which is composed of the remote controlling system of the cleaning robot 200 will be described in detail referring to FIG. 4. FIG. 4 is a schematic block diagram showing the configuration of a host device in FIG. 3. As shown in this drawing, the host device 300 includes a DTMF signal detecting unit 320 for detecting dual tone multi frequency (DTMF) signals received from an external telephone through a telephone line, a control unit 330 which contains a DTMF signal processing unit 331 for converting the DTMF signals detected by the DTMF signal detecting unit 320, into operation commands for the cleaning robot 200 through a wireless communication unit 310.

In addition, the cleaning robot 200 includes a wireless communication module 250 for receiving control signals transmitted by wireless from the wireless communication unit 310 of the host device 300 or a lot of external apparatuses 100-1-100-n, and a microprocessor 260 for controlling a driving of the cleaning robot 200 corresponding to the control signals received through the wireless communication module 250. Since the cleaning robot 200 was already explained referring to FIG.2, the details will be omitted.

The wireless communication unit 310 receives and transmits data to and from the wireless communication module 250 of the cleaning robot 200. The wireless communication unit 310 sets up a connection between the cleaning robot 200 and the host device 300, and transmits the operation commands processed by the DTMF signal processing unit 331 on the basis of the wireless communication protocol. The DTMF signal processing unit 331 detects the DTMF signals transmitted from a telephone of an external user through a telephone line, and transmits them to the DTMF signal processing unit 331 of the control unit 330.

The control unit 330 for controlling the whole operations of the host device 300 includes the DTMF signal processing unit 331. The DTMF signal processing unit 331 converts the DTMF signals detected by the DTMF signal detecting unit 320, into operation commands for the cleaning robot 200 through a wireless communication unit 310.

On the other hand, operating procedures of the remote controlling system which contains the host device 300 and the cleaning robot 200 according to the present invention will be explained as follows.

To begin with, when a user has an external phone call, the host device 300 outputs a voice response message. If the user requests a use of the remote control function of the cleaning robot 200, the control unit 330 of the host device 300 requests the user to send user license information such as a personal code number.

If the user is confirmed as a real user through the user license information, the host device 300 outputs a remote control response comment of the cleaning robot 200. If the user pushes buttons of the phone, DTMF signals for remote controlling are generates. When the DTMF signals are transmitted to the host device 300, the host device 300 decodes operation commands of the cleaning robot 200 from the transmitted DTMF signals, and transmits the cleaning robot 200 through wireless communication means including wireless LAN, Bluetooth, Zigbee and infrared. Thus, the cleaning robot 200 performs operations depending on the received control signals.

The host device 300 according the present invention further includes an operation signal detecting unit 340 for detecting operation signals of the cleaning robot 200 which contains identification information of the host device 300 transmitted through a network such as an internet. The control unit 330 further includes an operation signal processing unit 332 for converting the operation signals detected by the operation signal detecting unit 340, into operation commands for the cleaning robot 200, and transmitting them to the cleaning robot 200 through the wireless communication unit 310.

The operation signal detecting unit 340 detects the operation signals transmitted to the corresponding host device 300 through the network such as the internet, and outputs them to the operation signal processing unit 332 of the control unit 330. The host device 300 arranged in a house has inherent identification information, for example, IP address information. In addition, the user can access to the corresponding host device 300 through a website provided from a cleaning robot provider. The operation signal processing unit 332 converts the operation commands detected through the operation signal detecting unit 340 into operation commands of the cleaning robot 200, and transmits them to the cleaning robot through the wireless communication unit 310.

Operating procedures of the above remote controlling system of the cleaning robot 200 will be described as follows.

Since the host device 300 arranged in a house has inherent identification information, for example, IP address information, the user can access to the corresponding host device 300 through the website provided from the cleaning robot provider.

If the user accesses to the website of the cleaning robot provider and finishes the user license, the user can select to input desirable function on a remote control menu of the cleaning robot 200 provided from the corresponding website. The website converts the inputted function information into operation signals appreciate to the network communication, and transmits the host device 300 of the user having predetermined identification information. The host device 300 receives the corresponding operation signals, and transmits them to the cleaning robot 200. Thus, the cleaning robot 200 performs operations depending on the received control signals.

As apparent from the above description, the present invention provides a wireless controllable cleaning robot, wherein, since the wireless controllable cleaning robot is capable of controlling of the driving through a remote controller provided therewith as well as a lot of the external apparatuses which arranges various wireless communication means, it is possible to select the most appreciate wireless control means according to available environments.

In addition, the present invention provides a remote controlling system for controlling the cleaning robot, wherein, the user is capable of remote controlling the cleaning robot by means of transmitting operation commands to the cleaning robot in a house from various external apparatuses through the network such as an internet.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A cleaning robot being capable of controlling by wireless, the cleaning robot comprising:
a wireless communication module for receiving control signals transmitted from external apparatuses on the basis of various wireless communication protocols; and
a microprocessor for decoding the control signals received through the wireless communication module on the basis of the corresponding wireless communication protocol, and controlling a driving of the cleaning robot in response to the decoded operation commands.

2. The cleaning robot as set forth in claim 1, wherein the wireless communication module includes a wireless LAN communication unit for receiving control signals transmitted on the basis of an 802.11-based wireless LAN communication protocol.

3. The cleaning robot as set forth in claim 1, wherein the wireless communication module includes a Bluetooth communication unit for receiving control signals transmitted on the basis of a Bluetooth communication protocol.

4. The cleaning robot as set forth in claim 1, wherein the wireless communication module includes a Zigbee communication unit for receiving control signals transmitted on the basis of a Zigbee communication protocol.

5. The cleaning robot as set forth in claim 1, wherein the wireless communication module includes an infrared communication unit for receiving control signals transmitted on the basis of an infrared communication protocol.

6. A remote controlling system of a cleaning robot which is controlled operations thereof in response to control signals transmitted by wireless, the remote controlling system comprising:
a host device for receiving operation commands for the cleaning robot transmitted from external apparatuses, converting the operation commands into wireless signals, and transmitting the wireless signals to the cleaning robot.

7. The remote controlling system as set forth in claims 6, wherein the host device comprising:
a DTMF signal detecting unit for detecting dual tone multi frequency (DTMF) signals received from an external telephone through a telephone line;
a control unit which contains a DTMF signal processing unit for converting the DTMF signals detected by the DTMF signal detecting unit, into operation commands for the cleaning robot; and
a wireless communication unit for transmitting by wireless the operation commands of the control unit to the cleaning robot.

8. The remote controlling system as set forth in claims 7, wherein the host device outputs voice response messages for remote controlling of the cleaning robot, to the telephone connected through the telephone line.

9. The remote controlling system as set forth in claims 7, wherein, the host device includes an operation signal detecting unit for detecting operation signals transmitted through a network such as an internet, and
the control unit further includes an operation signal processing unit for converting the operation signals detected by the operation signal detecting unit, into operation commands for the cleaning robot.

10. The remote controlling system as set forth in claims 9, wherein the operation commands for the cleaning robot contains identification information of the corresponding host device.

11. The remote controlling system as set forth in claims 10, wherein the identification information is an internet protocol (IP) address.

12. The remote controlling system as set forth in claims 7, wherein the wireless communication unit transmits the operation commands to the cleaning robot on the basis of an 802.11-based wireless LAN communication protocol.

13. The remote controlling system as set forth in claims 7, wherein the wireless communication unit transmits the operation commands to the cleaning robot on the basis of a Bluetooth communication protocol.

14. The remote controlling system as set forth in claims 7, wherein the wireless communication unit transmits the operation commands to the cleaning robot on the basis of a Zigbee communication protocol.

15. The remote controlling system as set forth in claims 7, wherein the wireless communication unit transmits the operation commands to the cleaning robot on the basis of an infrared communication protocol.
